# EUROPEAN PATENT APPLICATION

(11) **EP 3 065 446 A1**
(43) Date of publication of application: **07.09.2016**
(21) Application number: 14858899.9
(22) Date of filing: 21.05.2014
(51) Int. Cl.: H04W 24/04

(54) **MINIMIZATION OF DRIVE TEST METHOD AND DEVICE**

(30) Priority: 29.10.2013 CN 201310524694
(71) Applicant: ZTE Corporation, Shenzhen, Guangdong 518057 (CN)
(72) Inventor: WANG, Zhi, Shenzhen Guangdong 518057 (CN)
(74) Representative: Brunazzi, Stefano
(86) International application number: PCT/CN2014/078056
(87) International publication number: WO 2015/062250

(57) **Abstract**

The disclosure provides a method and device for Minimization of Drive Tests (MDT). Wherein, the method includes that: a terminal determines a measurement cycle for MDT of at least one cell according to a capability of the terminal, and performs MDT of the at least one cell according to the measurement cycle; and the terminal performs log recording after the MDT of the at least one cell is completed. The problems of storage of excessive redundant information and incapability in recording a change of a neighbouring cell in real time during MDT are solved, and overall performance of MDT is improved.

## Description

### Technical Field

The embodiments of the disclosure relate to the field of communication, and in particular to a method and device for Minimization of Drive Tests (MDT).

### Background

At present, compared with conventional drive test, MDT has multiple advantages, for example: drive test overhead may be reduced, an optimization cycle may be shortened, energy may be saved, emissions may be reduced, and all-region measurement information (such as a narrow road, a forest and a private place) which may not be obtained by a conventional drive test method may be collected, thereby network optimization and maintenance cost of a mobile communication operating company are reduced. However, there are many shortcomings during a practical application.

Protocol (36.133) specifies a minimum measurement capability, i.e. a longest measurement cycle interval, of User Equipment (UE). For example, intra-frequency neighbouring cell measurement (Table 1) and Universal Mobility Telecommunication System Terrestrial Radio Access (UTRA) measurement (Table 2):

**Table 1**

| DRX cycle length [s] | Tmeasure, EUTRAN_Intra [s] (number of DRX cycles) |
|---|---|
| 0.32 | 1.28(4) |
| 0.64 | 1.28(2) |
| 1.28 | 1.28(1) |
| 2.56 | 2.56(1) |

**Table 2**

| DRX cycle length [s] | TmeasureUTRA_FDD [s] (number of DRX cycles) |
|---|---|
| 0.32 | 5.12(16) |
| 0.64 | 5.12(8) |
| 1.28 | 6.4(5) |
| 2.56 | 7.68(3) |

An intra-frequency neighbouring cell measurement cycle is Tmeasure,EUTRAN_Intra, and a UTRA measurement cycle is N*TmeasureUTRA_FDD (N is the number of started UTRA measurement frequency points). From Table 1 and Table 2, it can be seen that both of the measurement cycles are greatly different.

In a related art, Log MDT is implemented mainly on the basis of UE configuration of a network for LOG recording through dedicated Downlink-Dedicated Control Channel (DL-DCCH) signalling LoggedMeasurementConfiguration in an RRC-CONNECTED state at present. A key parameter is LoggingInterval, and represents that LOG information is recorded by adopting LoggingInterval as a cycle. Recorded contents include serving cell information and all neighbouring cell information.

According to different measurement cycles, fixed cycles may cause storage of excessive redundant information (in case of short LoggingInterval) or incapability in recording a change of a neighbouring cell in real time (in case of long LoggingInterval) for measurement and recording methods for all cells. Different UE with different capabilities may support different measurement capabilities, that is, measurement cycles are different. In addition, for specific UE, measurement cycles for measurement of different systems are also different. Therefore, the UE may not record a change of quality of cells, such as a serving cell and an intra-frequency neighbouring cell, with short measurement cycles in real time in case of long LoggingInterval. For Inter-system cells with long measurement cycles, the same cell measurement information may be recorded for many times in case of short LoggingInterval. Information redundancy may increase a requirement on a memory of the UE, and may also increase an air interface load during LOG reporting (a Service Data Unit (SDU) of a Packet Data Convergence Protocol (PDCP) processing upper layer (including Radio Resource Control (RRC) signalling) maximally has 8,188bytes only at present).

For the problems of storage of excessive redundant information and incapability in recording a change of a neighbouring cell in real time during MDT in the related art, there is yet no solution.

### Summary

The embodiments of the disclosure provide a method and device for MDT, so as to at least solve the problems of storage of excessive redundant information and incapability in recording a change of a neighbouring cell in real time during MDT.

According to one aspect of the embodiments of the disclosure, a method for MDT is provided, which may include that: a terminal determines a measurement cycle for MDT of at least one cell according to a capability of the terminal, and performs MDT of the at least one cell according to the measurement cycle; and the terminal performs log recording after the MDT of the at least one cell is completed.

In an embodiment of the disclosure, the step that the terminal determines the measurement cycle for MDT according to a capability of the terminal may include that: the terminal determines the measurement cycle for MDT according to the capability of the terminal under the condition that configuration information received from a network side does not contain the measurement cycle for MDT; and under a condition that the configuration information received from the network side contains the measurement cycle for MDT, the terminal performs MDT according to the measurement cycle in the configuration information.

In an embodiment of the disclosure, the step that the terminal determines the measurement cycle for MDT according to the capability of the terminal may include that: the terminal regulates the measurement cycle for MDT according to a relationship between the capability of the terminal and a preset threshold.

In an embodiment of the disclosure, the step that the terminal determines the measurement cycle for MDT according to the capability of the terminal may include that: the terminal determines the measurement cycle of the at least one cell according to the capability of the terminal and a cell type.

In an embodiment of the disclosure, the at least one cell may include a neighbouring cell of a cell where the terminal resides.

In an embodiment of the disclosure, the cell type may include at least one of: an intra-frequency cell, an inter-frequency cell, a UTRA cell, a Global System for Mobile Communications (GSM) cell and a Code Division Multiple Access (CDMA) cell.

According to the other aspect of the embodiments of the disclosure, a device for MDT is provided, which may be located in a terminal, the device including: a measurement component, configured for the terminal to determine a measurement cycle for MDT of at least one cell according to the capability of the terminal, and perform MDT of the at least one cell according to the measurement cycle; and a log component, configured to perform log recording after the MDT of the at least one cell is completed.

In an embodiment of the disclosure, the device may further include: a receiving component, configured to receive configuration information from a network side; the measurement component may determine the measurement cycle for MDT according to the capability of the terminal under the condition that the configuration information received from the network side does not contain the measurement cycle for MDT; and the measurement component may perform MDT according to the measurement cycle in the configuration information under the condition that the configuration information of the network side contains the measurement cycle for MDT.

In an embodiment of the disclosure, the measurement component may be configured to regulate the measurement cycle for MDT according to a relationship between the capability of the terminal of the terminal and a preset threshold.

In an embodiment of the disclosure, the measurement component may be configured to determine the measurement cycle of the at least one cell according to the capability of the terminal of the terminal and a cell type.

In an embodiment of the disclosure, the at least one cell may include a neighbouring cell of a cell where the terminal resides.

In an embodiment of the disclosure, the cell type may include at least one of: an intra-frequency cell, an inter-frequency cell, a UTRA cell, a GSM cell and a CDMA cell.

According to the embodiments of the disclosure, the terminal determines the measurement cycle for MDT of the at least one cell according to the capability of the terminal, and performs MDT of the at least one cell according to the measurement cycle; and the terminal performs log recording after the MDT of the at least one cell is completed, so that the problems of storage of excessive redundant information and incapability in recording a change of a neighbouring cell in real time during MDT are solved, and overall performance of MDT is improved.

### Brief Description of the Drawings

The drawings described here are adopted to provide further understanding of the disclosure, and form a part of the disclosure. Schematic embodiments of the disclosure and description thereof are adopted to explain the disclosure and not intended to form improper limits to the disclosure. In the drawings:
Fig. 1 is a flowchart of a method for MDT according to an embodiment of the disclosure;
Fig. 2 is a first structure block diagram of a device for MDT according to an embodiment of the disclosure;
Fig. 3 is a second structure block diagram of a device for MDT according to an embodiment of the disclosure;
Fig. 4 is a diagram of a method for MDT according to a preferred embodiment of the disclosure; and
Fig. 5 is a flowchart of an MDT information method according to a preferred embodiment of the disclosure.

### Detailed Description of the Embodiments

It is important to note that embodiments in the disclosure and characteristics in the embodiments may be combined under the condition of no conflicts. The embodiments of the disclosure will be described below with reference to the drawings and the embodiments in detail.

In the following embodiments, a terminal may be a mobile terminal (for example, a mobile phone and a tablet), and may also be a terminal of another type. An operating system running on the terminal may also be various kinds of systems, for example, an android system which is widely used at present, or a Windows operating system and an iOS system, and is not limited to these systems.

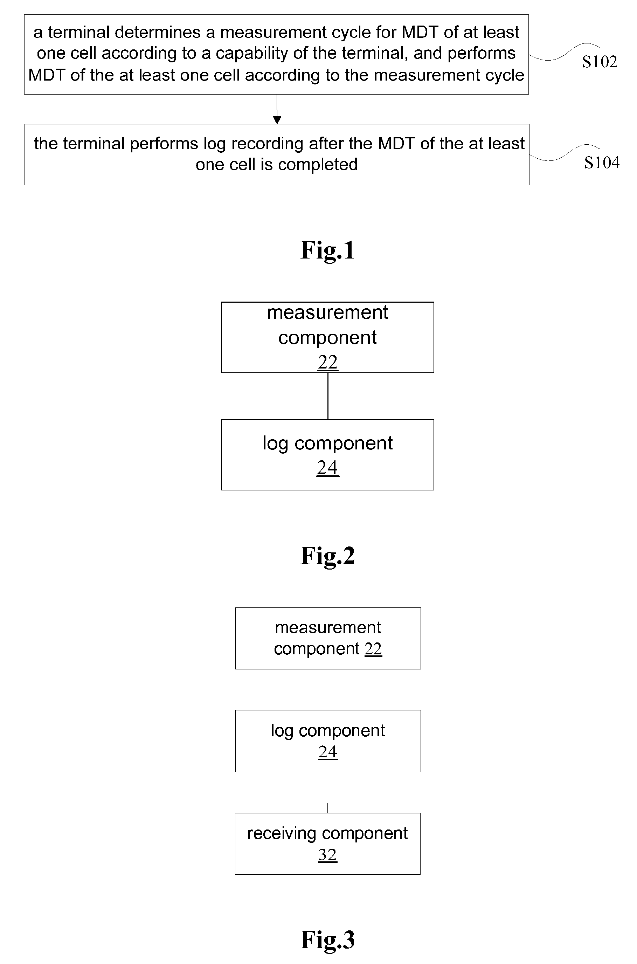

The embodiment provides a method for MDT, Fig. 1 is a flowchart of a method for MDT according to an embodiment of the disclosure, and as shown in Fig. 1, the flow includes the following steps:
Step S102: a terminal determines a measurement cycle for MDT of at least one cell according to a capability of the terminal, and performs MDT of the at least one cell according to the measurement cycle; and
Step S104: the terminal performs log recording after the MDT of the at least one cell is completed.

According to the embodiments of the disclosure, the terminal determines the measurement cycle for MDT of the at least one cell according to the capability of the terminal, and performs MDT of the at least one cell according to the measurement cycle; and the terminal performs log recording after the MDT of the at least one cell is completed, so that the problems of storage of excessive redundant information and incapability in recording a change of a neighbouring cell in real time during MDT are solved, and overall performance of MDT is improved.

In the embodiment, the terminal determines the measurement cycle for MDT according to the capability of the terminal, and the capability of the terminal may include: a comprehensive capability including a service condition of a Central Processing Unit (CPU) of the terminal, a utilization rate of a memory, left power of a battery and the like.

In the embodiment, the method for MDT may also implement measurement in a manner of combining a fixed-cycle-based measurement manner and determination of the measurement cycle according to the capability of the terminal according to measurement requirements of different cells and operating companies, and in an embodiment of the disclosure, the terminal determines the measurement cycle for MDT according to the capability of the terminal under the condition that configuration information received from a network side does not contain the measurement cycle for MDT; and the terminal performs MDT according to the measurement cycle in the configuration information under the condition that the configuration information of the network side contains the measurement cycle for MDT.

In the embodiment, a threshold may be set for the capability of the terminal, a range of the threshold may be related to the measurement cycle determined by the terminal, and the terminal may regulate the measurement cycle for MDT according to a relationship between the capability of the terminal and a preset threshold.

In the embodiment, different cell types have different measurement cycle requirements, so that the measurement cycle may be determined according to the capability of the terminal, and may also be determined for different cell types, or, the measurement cycle may be determined for measurement according to the capability of the terminal and a cell type, and preferably, the terminal determines the measurement cycle of the at least one cell according to the capability of the terminal and a cell type.

In the embodiment, the at least one cell include a neighbouring cell of a cell where the terminal resides. The cell type may include at least one of: an intra-frequency cell, an inter-frequency cell, a UTRA cell, a GSM cell and a CDMA cell.

The embodiment further provides a device for MDT, the device for MDT is configured to implement the abovementioned method, and that what has been described in the abovementioned embodiment and preferred implementation modes will not be elaborated herein.

It is important to note that names of components in the following device are not intended to practically limit the components, and for example, a measurement component may be described as "a measurement component configured for a terminal to determine a measurement cycle for MDT of at least one cell according to the capability of the terminal and perform MDT of the at least one cell according to the measurement cycle". The following components may all be implemented in a processor, and for example, a receiving component may be described as "a processor, configured for a terminal to determine a measurement cycle for MDT of at least one cell according to the capability of the terminal and perform MDT of the at least one cell according to the measurement cycle", or, "a processor, including a measurement component" and the like.

Fig. 2 is a first structure block diagram of a device for MDT according to an embodiment of the disclosure, the device, as shown in Fig. 2, includes: a measurement component 22 and a log component 24, the measurement component 22 and the log component 24 are located in a terminal, and the structure will be described below.

The measurement component 22 is configured for the terminal to determine a measurement cycle for MDT of at least one cell according to the capability of the terminal, and perform MDT of the at least one cell according to the measurement cycle; and
the log component 24 is configured to perform log recording after the MDT of the at least one cell is completed.

According to the device, MDT of the terminal will not be limited to fixed measurement cycle-based cell measurement, and the terminal determines the measurement cycle for MDT of the at least one cell according to the capability of the terminal, and performs MDT of the at least one cell according to the measurement cycle; and the terminal performs log recording after the MDT of the at least one cell is completed, so that the problems of storage of excessive redundant information and incapability in recording a change of a neighbouring cell in real time during MDT are solved, and overall performance of MDT is improved.

Fig. 3 is a second structure block diagram of a device for MDT according to an embodiment of the disclosure, and as shown in Fig. 3, the device for MDT further includes: a receiving component 32. The device will be described below.

The receiving component 32 is configured to receive configuration information of a network side.

The measurement component 22 determines the measurement cycle for MDT according to the capability of the terminal under the condition that the configuration information received from the network side does not contain the measurement cycle for MDT; and the measurement component 22 performs MDT according to the measurement cycle in the configuration information under the condition that the configuration information of the network side contains the measurement cycle for MDT.

In the embodiment, the measurement component 22 is configured to regulate the measurement cycle for MDT according to a relationship between the capability of the terminal of the terminal and a preset threshold.

In the embodiment, the measurement component 22 is configured to determine the measurement cycle of the at least one cell according to own capability of the terminal and a cell type.

The embodiments of the disclosure will be described below with reference to preferred embodiments and preferred implementation modes.

### Preferred embodiment 1

The preferred embodiment overcomes shortcomings of current fixed-cycle-based log recording of all neighbouring cells, and discloses a method for performing log measurement and recording according to a measurement capability (measurement cycle) of UE, thereby improving overall performance of MDT.

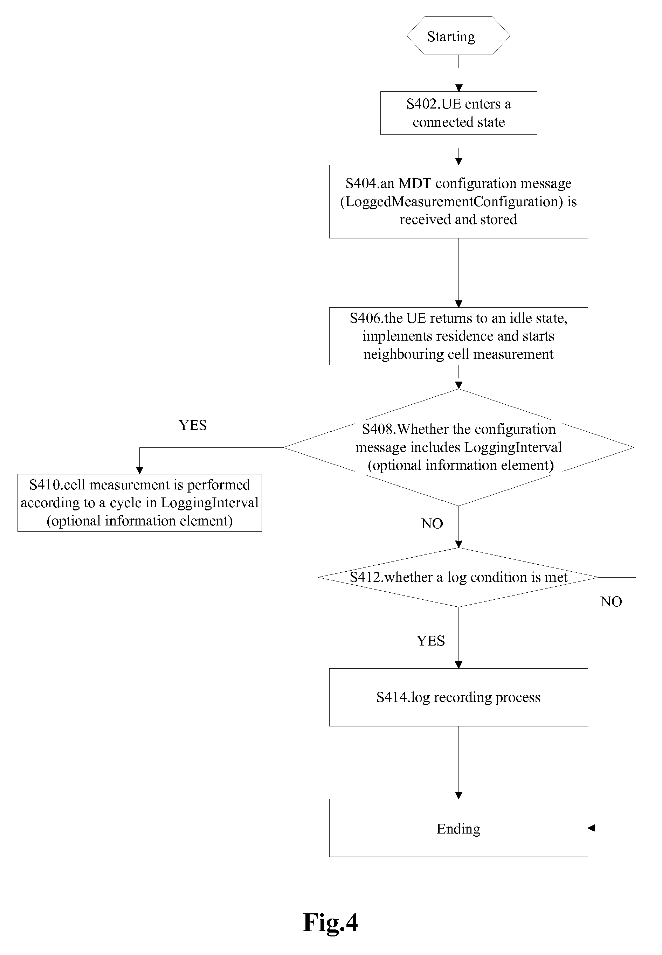

Fig. 4 is a diagram of a method for MDT according to a preferred embodiment of the disclosure, and as shown in Fig. 4, the diagram includes the following steps:
Step S402: UE enters a connected state, i.e. RRC_CONNECTED state;
Step S404: configuration information for MDT is received and stored, and the UE receives and stores log configuration information LoggedMeasurementConfiguration pushed by a network side, wherein LoggingInterval is an optional information element;
Step S406: the UE returns to an idle state, implements residence and starts neighbouring cell measurement, and the UE starts measurement of a serving cell and a neighbouring cell according to received system information after implementing normal residence;
Step S408: whether the configuration information includes LoggingInterval or not is judged;
Step S410: under the condition that the configuration information includes LoggingInterval, the cells are measured according to a cycle in LoggingInterval;
Step S412: whether a log condition is met or not is judged, and the UE performs cell measurement according to the capability of the terminal under the condition that the configuration information does not include LoggingInterval, wherein the log condition includes: effective MDT configuration, normal residence, Registered Public Land Mobile Network (RPLMN) matching and meeting of an AreaConfiguration condition; target cells for measurement are divided into five types: an intra-frequency cell (including the serving cell), an inter-frequency cell, a UTRA cell, a GSM cell and a CDMA cell according to different measurement cycles;
Step S414: the UE performs measurement according to the measurement cycle in a log recording process, wherein the measurement cycle is a complete and effective measurement time rather than a specific sampling interval; log recording of corresponding cell information is performed after measurement of the cell of the corresponding type is implemented, and the measurement cycle of the cell of the corresponding type is recorded at the same time; and when information of the cell of any type is recorded, serving cell information is filled.

In the preferred embodiment, the terminal (UE) may perform MDT log information recording according to the capability of the terminal. A new measurement result is generated at a recording moment. In such a manner, the problem of information redundancy (the same measurement information) caused by short fixed log cycle or incapability in tracking a change of a cell in real time due to a long log cycle may be solved, a change of a cell may be tracked in real time, a wireless environment condition may be represented more accurately and directly, redundant information may be reduced, a storage space of the UE may be saved, and an air interface load may be reduced when log information is reported to a network side, thereby improving overall performance of an MDT function of the UE.

### Preferred embodiment 2

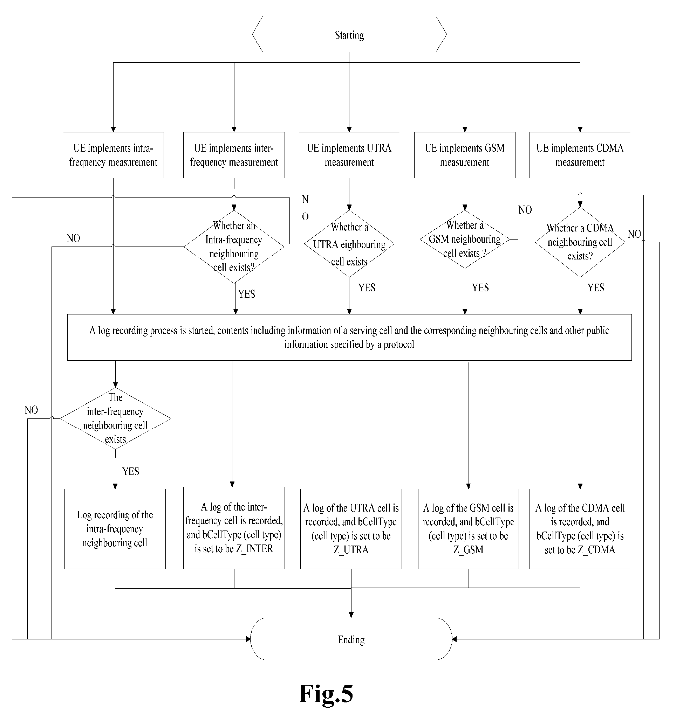

Fig. 5 is a flowchart of an MDT information method according to a preferred embodiment of the disclosure, and as shown in Fig. 5, steps of the MDT information recording method disclosed by the preferred embodiment are further described in detail:
Step S502: UE in an RRC-CONNECTED state receives an MDT configuration message LoggedMeasurementConfiguration sent by a network, stores LoggedMeasurementConfiguration in local variables VarLogMeasConfig and VarLogMeasReport of the UE, and simultaneously records an RPLMN where the UE resides at present;
Step S504: the UE returns to an idle state from the connected state for normal residence, starts required neighbouring cell measurement according to quality of a serving cell at first, measurement of a specified frequency point and cell being required to be implemented within a specified cycle, and starts a log recording process when RPLMN and AreaConfiguration conditions are both met;
Step S506: if VarLogMeasConfig specifies a fixed interval for log collection, a protocol flow is executed, otherwise Step 508 is executed;
Step S508: cells are divided into five types of intra-frequency (including the serving cell), inter-frequency, UTRA, GSM and CDMA cells according to different measurement cycles, their corresponding measurement cycles are Tintra, Tinter, Tutra, Tgsm and Tcdma respectively, and an enumeration type is set at the same time:

```
typedef enum
    {
    Z_SCELL,
    Z_INTRA,
    Z_INTER,
    Z-UTRA,
    Z_GSM,
    Z_CDMA
    }T_zCellType;
```

log recording is independently performed according to the abovementioned type every time, and recording of information of multiple types of cells in the same log should be avoided; recording of information of the cells of each type is implemented by Step S510 to Step S518 respectively;
Step S510: after intra-frequency measurement is implemented once, log recording is performed on information of an intra-frequency cell, contents including: information of the serving cell (cell information and a measurement result), an intra-frequency neighbouring cell and another information element required by a protocol, if the intra-frequency neighbouring cell exists, the cell type bCellType in VarLogMeasReport is set to be Z_INTRA and a measurement cycle of the intra-frequency neighbouring cell is set at the same time, otherwise bCellType is set to be Z_SCELL;
Step S512: after inter-frequency measurement is implemented once, when the inter-frequency neighbouring cell exists, information of the serving cell and a corresponding neighbouring cell is recorded, the cell type bCellType in VarLogMeasReport is set to be Z_INTER, and a measurement cycle of the inter-frequency neighbouring cell is set at the same time, and if the neighbouring cell does not exist, log recording is not performed;
Step S514: after UTRA measurement is implemented once, when a UTRA neighbouring cell exists, the information of the serving cell and the corresponding neighbouring cell is recorded, the cell type bCellType in VarLogMeasReport is set to be Z_UTRA, and a measurement cycle of the UTRA neighbouring cell is set at the same time, and if the neighbouring cell does not exist, log recording is not performed;
Step S516: after GSM measurement is implemented once, when a GSM neighbouring cell exists, the information of the serving cell and the corresponding neighbouring cell is recorded, the cell type bCellType in VarLogMeasReport is set to be Z_GSM, and a measurement cycle of the GSM neighbouring cell is set at the same time, and if the neighbouring cell does not exist, log recording is not performed;
Step S518: after CDMA measurement is implemented once, when a CDMA neighbouring cell exists, the information of the serving cell and the corresponding neighbouring cell is recorded, the cell type bCellType in VarLogMeasReport is set to be Z_CDMA, and a measurement cycle of the CDMA neighbouring cell is set at the same time, and if the neighbouring cell does not exist, log recording is not performed; and
Step S520: when the network side requests for the MDT LOG information, the UE codes and reports the cell information in VarLogMeasReport.
   Wherein, functions realized by Step S502 to Step S506 are the same as those realized by Step S402 to Step S408 in Fig. 4, and will not be elaborated herein.

The preferred embodiment overcomes shortcomings of current fixed-cycle-based log recording of all neighbouring cells, implements real-time tracking of the changes of the cells, so that a wireless environment condition may be represented more accurately and directly, redundant information may be reduced, a storage space of the UE may be saved, and an air interface load may be reduced when the log information is reported to the network side to further improve overall performance of an MDT function of the UE.

Obviously, those skilled in the art should know that each component or step of the disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, or may form each integrated circuit component respectively, or multiple components or steps therein can form a single integrated circuit component for implementation. As a consequence, the disclosure is not limited to any specific hardware and software combination.

The above is only the preferred embodiment of the disclosure and not intended to limit the disclosure, and for those skilled in the art, the disclosure may have various modifications and variations. Any modifications, equivalent replacements, improvements and the like within the spirit and principle of the disclosure shall fall within the scope of protection of the disclosure.

### Industrial Applicability

From the above, the method and device for MDT provided by the embodiment of the disclosure have the following beneficial effects: the problems of storage of excessive redundant information and incapability in recording a change of a neighbouring cell in real time during MDT are solved, and overall performance of MDT is improved.

## Claims

1. A method for Minimization of Drive Tests, MDT, comprising:
determining, by a terminal, a measurement cycle for MDT of at least one cell according to a capability of the terminal, and performing MDT of the at least one cell according to the measurement cycle; and
performing, by the terminal, log recording after the MDT of the at least one cell is completed.

2. The method as claimed in claim 1, wherein
determining, by the terminal, the measurement cycle for MDT according to the capability of the terminal comprises: determining, by the terminal, the measurement cycle for MDT according to the capability of the terminal under a condition that configuration information received from a network side does not contain the measurement cycle for MDT; and
the method further comprises: under a condition that the configuration information received from the network side contains the measurement cycle for MDT, performing, by the terminal, MDT according to the measurement cycle contained in the configuration information.

3. The method as claimed in claim 1, wherein determining, by the terminal, the measurement cycle for MDT according to the capability of the terminal comprises:
regulating, by the terminal, the measurement cycle for MDT according to a relationship between the capability of the terminal and a preset threshold.

4. The method as claimed in any one of claims 1 to 3, wherein determining, by the terminal, the measurement cycle for MDT according to the capability of the terminal comprises:
determining, by the terminal, the measurement cycle of the at least one cell according to the capability of the terminal and a cell type.

5. The method as claimed in claim 4, wherein the at least one cell comprises at least one neighbouring cell of a cell where the terminal resides.

6. The method as claimed in claim 4, wherein the cell type comprises at least one of:
an intra-frequency cell, an inter-frequency cell, a Universal Mobility Telecommunication System Terrestrial Radio Access (UTRA) cell, a Global System for Mobile Communications, GSM, cell and a Code Division Multiple Access, CDMA, cell.

7. A device for Minimization of Drive Tests, MDT, located in a terminal, the device comprising:
a measurement component, configured to determine a measurement cycle for MDT of at least one cell according to a capability of the terminal, and perform MDT of the at least one cell according to the measurement cycle; and
a log component, configured to perform log recording after the MDT of the at least one cell is completed.

8. The device as claimed in claim 7, further comprising:
a receiving component, configured to receive configuration information received from a network side, wherein
the measurement component is configured to determine the measurement cycle for MDT according to the capability of the terminal under a condition that configuration information received from the network side does not contain the measurement cycle for MDT; and
the measurement component is configured to, under a condition that the configuration information received fom the network side contains the measurement cycle for MDT, perform MDT according to the measurement cycle contained in the configuration information.

9. The device as claimed in claim 7, wherein
the measurement component is configured to regulate the measurement cycle for MDT according to a relationship between the capability of the terminal and a preset threshold.

10. The device as claimed in any one of claims 7 to 9, wherein
the measurement component is configured to determine the measurement cycle of the at least one cell according to the capability of the terminal and a cell type.

11. The device as claimed in claim 10, wherein the at least one cell comprises at least one neighbouring cell of a cell where the terminal resides.

12. The device as claimed in claim 10, wherein the cell type comprises at least one of:
an intra-frequency cell, an inter-frequency cell, a Universal Mobility Telecommunication System Terrestrial Radio Access, UTRA, cell, a Global System for Mobile Communications, GSM, cell and a Code Division Multiple Access, CDMA, cell.
